# EUROPÄISCHE PATENTSCHRIFT

(11) **EP 3 453 105 B1**
(45) Veröffentlichungstag und Bekanntmachung des Hinweises auf die Patenterteilung: **08.07.2020**
(21) Anmeldenummer: 17721066.3
(22) Anmeldetag: 18.04.2017
(51) Int. Cl.: H02K 15/10

(54) **VERFAHREN UND VORRICHTUNG ZUM HERSTELLEN EINES ISOLATIONSELEMENTS**
METHOD AND APPARATUS FOR PRODUCING AN INSULATION ELEMENT
PROCÉDÉ ET DISPOSITIF DE FABRICATION D'UN ÉLÉMENT D'ISOLATION

(30) Priorität: 02.05.2016 DE 102016207532
(43) Veröffentlichungstag der Anmeldung: 13.03.2019
(73) Patentinhaber: Robert Bosch GmbH, 70442 Stuttgart (DE); Aumann Espelkamp GmbH, 32339 Espelkamp (DE)
(72) Erfinder: HUBER, Michael, 77815 Bühl (DE); LUDWIGS, Christopher, 76139 Karlsruhe (DE); HAGEDORN, Jürgen, 32312 Lübbecke (DE)
(74) Vertreter: Hoefer & Partner Patentanwälte mbB
(86) Internationale Anmeldenummer: PCT/EP2017/059144
(87) Internationale Veröffentlichungsnummer: WO 2017/190943

(56) Entgegenhaltungen:
- WO-A1-2015/019685
- DE-A1-102004 030 716
- US-A1- 2013 300 248

## Beschreibung

### Stand der Technik

Die vorliegende Erfindung betrifft ein Verfahren zum Herstellen eines Isolationselements für einen Statorgrundkörper. Weiterhin betrifft die Erfindung eine Vorrichtung zum Herstellen eines Isolationselements für einen Statorgrundkörper oder Rotorgrundkörper oder Einzelzahngrundkörper. Vorteilhafterweise ist mit der erfindungsgemäßen Vorrichtung das erfindungsgemäße Verfahren ausführbar. Ein Verfahren gemäß dem Oberbegriff des Anspruchs 1 und eine Vorrichtung gemäß dem Oberbegriff des Anspruchs 10 sind aus den Dokumenten WO2015/019685 A1 und US 2013/300248 A1 bekannt.

Aus dem Stand der Technik ist bekannt, Statoren als Pakete von einzelnen Blechen zu fertigen. Auf diese Weise entsteht ein Statorgrundkörper oder Rotorgrundkörper oder Einzelzahngrundkörper. Der Statorgrundkörper oder Rotorgrundkörper oder Einzelzahngrundkörper kann alternativ aus einem Vollmaterial spanend und/oder urformend hergestellt werden. Der Statorgrundkörper oder Rotorgrundkörper oder Einzelzahngrundkörper wird mit einer Drahtwicklung versehen, wobei durch die Drahtwicklung elektrische Felder erzeugbar sind. Diese elektrischen Felder dienen zum Antreiben eines Rotors, wobei der Stator elektrisch kommutiert wird.

Um einen Kurzschluss zwischen dem Statorgrundkörper oder Rotorgrundkörper oder Einzelzahngrundkörper und der Wicklung sicher und zuverlässig zu verhindern, wird üblicherweise ein Isolationspapier verwendet, das zwischen Statorgrundkörper oder Rotorgrundkörper oder Einzelzahngrundkörper und Wicklung eingebracht wird. Ein solches Isolationspapier wird mittels eines Schneidmessers oder Stanzelements aus einer Papierbahn ausgeschnitten, wobei zuvor mittels Prägerollen Knickkanten aufgeprägt werden. Das aus der Papierbahn ausgeschnittene Element kann dann an den Knickkanten gefaltet werden, um das so entstehende Isolationspapier an den Statorgrundkörper oder Rotorgrundkörper oder Einzelzahngrundkörper anzulegen, insbesondere in Nuten des Statorgrundkörper oder Rotorgrundkörper oder Einzelzahngrundkörpers einzulegen.

An dem Stand der Technik ist nachteilig, dass für jede unterschiedliche Form und Abmessung des Statorgrundkörpers oder Rotorgrundkörpers oder Einzelzahngrundkörpers ein eigenes Werkzeug hergestellt werden muss, um Schnittkanten und Knickkanten korrekt zu platzieren. Außerdem ist die Designfreiheit des Papiers durch die Prägerollen und die Schneidmesser oder Stanzelemente eingeschränkt.

### Offenbarung der Erfindung

Das erfindungsgemäße Verfahren erlaubt auf einfach und kostengünstige Weise, Isolationselemente, die insbesondere Isolationspapiere sind, für einen Statorgrundkörper herzustellen, wobei die Isolationselemente an unterschiedliche Formen und Abmessungen eines Statorgrundkörpers oder Rotorgrundkörpers oder Einzelzahngrundkörpers, wobei sich aus Einzelzahngrundkörpern ein Rotorgrundkörper oder ein Statorgrundkörper zusammensetzen lässt, angepasst werden können, ohne dass hierzu ein neues Werkzeug benötigt wird.

Insbesondere lässt sich jedes Isolationselement exakt fertigen, wodurch eine hochwertige Isolierung zwischen Blechpaket des Statorgrundkörpers oder Rotorgrundkörpers oder Einzelzahngrundkörpers und Wicklung des Statorgrundkörpers oder Rotorgrundkörpers oder Einzelzahngrundkörpers bereitgestellt werden kann.

Das erfindungsgemäße Verfahren zum herstellten eines Isolationselements für einen Statorgrundkörper oder Rotorgrundkörper oder Einzelzahngrundkörper wird in Anspruch 1 definiert und umfasst die folgenden Schritte: Zunächst wird ein Isolationsmaterial bereitgestellt. Dies erfolgt insbesondere in Form einer Materialbahn. Die Materialbahn umfasst das Isolationsmaterial, das vorteilhafterweise aus einem Kunststoffmaterial besteht. Das Kunststoffmaterial kann zusätzlich beschichtet sein. Außerdem erfolgt ein Empfangen oder Generieren oder Abrufen von Bearbeitungsdaten. Unter Abrufen ist dabei zu verstehen, dass bereits vorhandene Bearbeitungsdaten verwendet werden. Die Bearbeitungsdaten umfassen solche Daten, anhand derer das Isolationsmaterial zu bearbeiten ist, um daraus das Isolationselement zu erhalten. Die Bearbeitungsdaten können vorab gespeichert sein und aus einem Speicher geladen werden oder alternativ neu empfangen werden. Bevorzugt wird das Isolationselement in eine Nut des Statorgrundkörpers oder Rotorgrundkörpers oder Einzelzahngrundkörpers eingelegt, sodass die Bearbeitungsdaten zumindest eine Schwächungsstelle (6) des Isolationsmaterials (4) zum Schwächen des Isolationsmaterials (4) oder zumindest eine Schnittstelle zum Schneiden des Isolationsmaterials und zumindest eine Schwächungsstelle zum Schwächen des Isolationsmaterials umfassen. Mittels unterschiedlicher Anordnung der Schnittstellen sind somit unterschiedliche Größen des Isolationselements realisierbar. Die Schwächungsstellen erlauben insbesondere ein einfaches und präzises Falten des Isolationsmaterials, sodass durch unterschiedliches Anordnen der Schwächungsstellen unterschiedliche Formen des Isolationselements erreicht werden können. Somit ist erreichbar, dass aus einem Isolationsmaterial eine Vielzahl von unterschiedlichen Isolationselementen herstellbar ist, wobei durch die Anordnung und Abmessung der Schwächungsstellen und der Schnittstellen das Isolationselement an unterschiedliche Formen eines Statorgrundkörpers, insbesondere einer Nut des Statorgrundkörpers, anpassbar sind.

Weiterhin erfolgt ein Schritt des Bearbeitens des Isolationsmaterials anhand der Bearbeitungsdaten. Das Bearbeiten erfolgt mit einer Laservorrichtung, insbesondere mit einem CO2-Laser. Durch das Bearbeiten des Isolationsmaterials ist somit das Isolationselement herstellbar. Bevorzugt erfolgt die gesamte Bearbeitung des Isolationsmaterials, die zum Herstellen des Isolationselements notwendig ist, ausschließlich durch die Laservorrichtung. Das Bearbeiten durch die Laservorrichtung umfasst ein Schneiden des Isolationsmaterials entlang der Schnittstelle sowie ein Schwächen des Isolationsmaterials entlang der Schwächungsstelle. Insbesondere können mehrere Schnittstellen und mehrere Schwächungsstellen vorhanden sein, entlang derer das Isolationsmaterial geschwächt oder geschnitten und geschwächt wird.

Durch die Laservorrichtung lassen sich unterschiedliche Formen des Isolationselements einfach und kostengünstig aus dem Isolationsmaterial fertigen. Somit wird auf die Verwendung unterschiedlicher Werkzeuge verzichtet. Vielmehr erlaubt das erfindungsgemäße Verfahren das Verwenden eines einzigen Werkzeugs, nämlich der Laservorrichtung, um eine Vielzahl unterschiedlicher Isolationselemente aus dem Isolationsmaterial herzustellen.

Die Unteransprüche zeigen bevorzugte Weiterbildungen der Erfindung.

Bevorzugt umfasst der Schritt des Schwächens des Isolationsmaterials ein Einbringen einer Vertiefung in das Isolationsmaterial. Die Vertiefung verläuft insbesondere parallel zu der Schwächungsstelle. Alternativ oder zusätzlich umfasst der Schritt des Schwächens ein Perforieren des Isolationsmaterials. Unter Perforieren ist ein wiederholtes abschnittweises Durchschneiden des Isolationsmaterials entlang an der Schwächungsstelle zu verstehen, sodass sich entlang der Schwächungsstelle geschnittene Bereiche und nicht bearbeitete und somit nicht geschnittene Bereiche regelmäßig abwechseln. Das Perforieren hat gegenüber dem Einbringen der Vertiefung den Vorteil, dass eine Ausgangsleistung der Laservorrichtung nicht verändert werden muss. So kann das Perforieren mit derselben Ausgangsleistung durchgeführt werden, wie das Schneiden. Für das Einbringen der Vertiefung ist vorgesehen, dass eine Ausgangsleistung der Laservorrichtung gegenüber dem Schneiden verringert wird, sodass nur ein Teil der Dicke des Isolationsmaterials entfernt wird. Die Vertiefung wird insbesondere derart gefertigt, dass drei Viertel, vorteilhafterweise die Hälfte, besonders vorteilhaft ein Viertel, der Dicke des Isolationsmaterials entfernt wird. Somit ist erreichbar, dass das Isolationsmaterials einfach und zuverlässig an der Schwächungsstelle geknickt werden kann, um das Isolationsmaterial zu falten.

Besonders vorteilhaft erfolgt das das Einbringen der Vertiefung und/oder das Perforieren entlang einer bogenförmigen Schwächungsstelle. Besonders vorteilhaft erfolgt das das Einbringen der Vertiefung und/oder das Perforieren entlang einer S-förmigen Schwächungsstelle. Dies erleichtert ein nachfolgendes Falten des Isolationsmaterials. Durch die Laservorrichtung ist die bogenförmige und/oder S-förmige Schwächungsstelle einfach und kostengünstig herstellbar.

Vor dem Empfangen der Bearbeitungsdaten wird bevorzugt ein Vermessen des Statorgrundkörpers oder Rotorgrundkörpers oder Einzelzahngrundkörpers durchgeführt. Das Vermessen kann bevorzugt für jeden einzelnen Statorgrundkörper oder Rotorgrundkörper oder Einzelzahngrundkörper, für den zumindest ein Isolationselement hergestellt werden soll, einzeln durchgeführt werden. Besonders bevorzugt wird ein Statorgrundkörper oder Rotorgrundkörper oder Einzelzahngrundkörper einmal vermessen, um anschließend alle Isolationselemente für den Statorgrundkörper oder Rotorgrundkörper oder Einzelzahngrundkörper zu fertigen. Alternativ wird ein Statorgrundkörper oder Rotorgrundkörper oder Einzelzahngrundkörper besonders vorteilhaft mehrfach vermessen, um genaue Maße für die Fertigung der einzelnen Isolationselemente für den Statorgrundkörper oder Rotorgrundkörper oder Einzelzahngrundkörper zu erhalten. Bevorzugt ist außerdem vorgesehen, dass die Bearbeitungsdaten aus der Vermessung des Statorgrundkörpers oder Rotorgrundkörpers oder Einzelzahngrundkörpers generiert werden. Somit ist das gefertigte Isolationselement exakt an den Statorgrundkörper oder Rotorgrundkörper oder Einzelzahngrundkörper angepasst, wodurch eine sichere und zuverlässige Isolierung ermöglicht ist. Gleichzeitig ist die Fertigung durch die Verwendung der Laservorrichtung vereinfacht.

Eine Länge des Isolationselements, die durch einen Abstand zwischen zwei gegenüberliegenden Schnittstellen definiert wird, wird bevorzugt aus einer gemessen Dicke des Statorgrundkörpers oder Rotorgrundkörpers oder Einzelzahngrundkörpers bestimmt. Dabei wird zu der gemessenen Dicke ein Offset addiert. Das Offset beträgt bevorzugt maximal fünf Millimeter, insbesondere maximal drei Millimeter, vorteilhafterweise maximal einen Millimeter, besonders bevorzugt maximal einen halben Millimeter. Durch den Offset sich sichergestellt, dass eine sichere und zuverlässige Isolierung vorhanden ist. Insbesondere ist auf die Stirnflächen des Statorpakets eine Isolationsmaske oder andersartige Isolation aufbringbar, sodass durch das Offset das Isolationselement an der Isolationsmaske anliegt. Auf diese Weise ist eine sichere und zuverlässige Isolierung vorhanden, wobei bevorzugt auch vorgesehene Luft- und Kriechstrecken, insbesondere nach EN 60664-1, eingehalten sind

Für den Statorgrundkörper oder Rotorgrundkörper oder Einzelzahngrundkörper wird insbesondere eine Vielzahl von Isolationselementen hergestellt. Dabei ist jedes Isolationselement in jeweils eine Nut des Statorgrundkörpers oder Rotorgrundkörpers oder Einzelzahngrundkörpers einlegbar. Um die einzelnen Isolationselemente zu fertigen, erfolgt bevorzugt eine einzige Vermessung des Statorgrundkörpers, sodass die Bearbeitungsdaten für alle Isolationselemente identisch sind. Insbesondere wird eine Dicke des Statorgrundkörpers oder Rotorgrundkörpers oder Einzelzahngrundkörpers nur einmal bestimmt und für die Fertigung von allen Isolationselementen für diesen Statorgrundkörper oder Rotorgrundkörper oder Einzelzahngrundkörper verwendet. Somit ist ein Aufwand zum Durchführen von Messungen minimiert. Für jeden neuen Statorgrundkörper oder Rotorgrundkörper oder Einzelzahngrundkörper, für den Isolationselemente hergestellt werden sollen, werden Bearbeitungsdaten durch Vermessen des Statorgrundkörpers oder Rotorgrundkörpers oder Einzelzahngrundkörpers bevorzugt neu bestimmt.

Alternativ ist vorgesehen, dass die Bearbeitungsdaten für jedes einzelne Isolationselement individuell angepasst sind. Dabei ist insbesondere vorgesehen, dass ein Vermessen jeder einzelnen Nut des Statorgrundkörpers oder des Rotorgrundkörpers oder des Einzelzahngrundkörpers erfolgt, sodass Bearbeitungsdaten für jedes einzelne für die entsprechende Nut vorgesehene Isolationselement generiert werden können. Alternativ sind die einzelnen Bearbeitungsdaten vorab gespeichert und können so abgerufen oder geladen werden. Durch das Vorsehen von individuell angepassten Bearbeitungsdaten ist eine hohe Flexibilität bei der Fertigung der Isolationselemente erreichbar.

Die Bearbeitungsdaten umfassen bevorzugt ein auf das Isolationsmaterial aufzubringendes Muster und/oder einen auf das Isolationsmaterial aufzubringenden Schriftzug. Das Muster und/oder der Schriftzug erlauben insbesondere eine Nachverfolgbarkeit und/oder eine Zuordenbarkeit der Isolationselemente zu einzelnen Nuten des Statorgrundkörpers oder Rotorgrundkörpers oder Einzelzahngrundkörpers. Der Schritt des Bearbeitens umfasst bevorzugt ein Aufbringen des Musters und/oder des Schriftzuges auf das Isolationsmaterial. Somit ist eine Beschriftung des Isolationselements einfach und kostengünstig zu fertigen, da kein zusätzliches Werkzeug benötigt wird.

Bevorzugt beträgt ein Zeitraum für das Bearbeiten des Isolationsmaterials anhand der Bearbeitungsdaten maximal eine Sekunde. Besonders bevorzugt beträgt der Zeitraum maximal eine halbe Sekunde. Somit ist das Isolationselement rasch herstellbar, wobei durch die Laservorrichtung gleichzeitig eine exakte Fertigung sichergestellt ist.

Die Erfindung betrifft außerdem eine Herstellungsvorrichtung zum Herstellen eines Isolationselements für einen Statorgrundkörper oder Rotorgrundkörper oder Einzelzahngrundkörper gemäß Anspruch 10. Die Herstellungsvorrichtung umfasst eine Materialzufuhr, eine Laservorrichtung und eine Steuereinheit. Die Materialzufuhr dient zum Zuführen eines Isolationsmaterials. Die Laservorrichtung ist zum Bearbeiten des Isolationsmaterials eingerichtet, wobei die Steuereinheit zum Ansteuern der Laservorrichtung eingerichtet ist. Das Ansteuern der Laservorrichtung durch die Steuereinheit erfolgt insbesondere anhand der Bearbeitungsdaten. Die Steuereinheit ist daher außerdem zum Empfangen und/oder Generieren von Bearbeitungsdaten ausgebildet. Durch das Bearbeiten des Isolationsmaterials durch die Laservorrichtung ist das Isolationselement aus dem Isolationsmaterials herstellbar. Dabei ist erfolgt das Herstellen insbesondere innerhalb einer kurzen Zeitspanne, bevorzugt innerhalb von einer Sekunde, besonders bevorzugt innerhalb von einer halben Sekunde. Das Bearbeiten des Isolationsmaterials umfasst die Vorgänge Schneiden und Schwächen. Dabei ist unter Schwächen zu verstehen, dass nur ein Teil des Isolationsmaterials entfernt wird. Dies kann bevorzugt durch Perforieren und/oder Einbringen einer Vertiefung realisiert werden. Durch den Vorgang Schneiden ist das Isolationselemente in seinen Abmessungen definiert. Durch den Vorgang Schwächen lassen sich Knickstellen in das Isolationsmaterial einbringen, an denen das Isolationsmaterial faltbar ist, um so das Isolationselement herzustellen. Die Laservorrichtung umfasst bevorzugt einen CO2 Laser. Dieser ist insbesondere in einer Ausgangsleistung und/oder einer Verfahrgeschwindigkeit einstellbar, um wahlweise das Isolationsmaterial vollständig zu schneiden und schwächen oder lediglich zu schwächen. Die erfindungsgemäße Herstellungsvorrichtung erlaubt somit ein schnelles und exaktes Fertigen einer Vielzahl von unterschiedlichen Isolationselementen. Insbesondere ist ein Werkzeugwechsel, wie dies im Stand der Technik nötig ist, bei der erfindungsgemäßen Herstellungsvorrichtung vermieden.

Die Herstellvorrichtung weist bevorzugt eine Messvorrichtung zum Vermessen des Statorgrundkörpers oder Rotorgrundkörpers oder Einzelzahngrundkörpers auf. Insbesondere ist die Messvorrichtung zum Vermessen einer Dicke des Statorgrundkörpers oder Rotorgrundkörpers oder Einzelzahngrundkörpers eingerichtet. Alternativ oder zusätzlich ist die Messvorrichtung zum Messen zumindest einer Abmessung zumindest einer Nut des Statorgrundkörpers oder Rotorgrundkörpers oder Einzelzahngrundkörpers ausgebildet. Somit lassen sich mit der Messvorrichtung Zielmaße bestimmen, die die fertigen Isolationselemente aufweisen sollen. Dies erlaubt ein Fertigen von einer Vielzahl von unterschiedlichen Isolationselementen, wobei jedes Isolationselement auf den zu isolierenden Statorgrundkörper oder Rotorgrundkörper oder Einzelzahngrundkörper und/oder auf die zu isolierende Nut des Statorgrundkörpers oder Rotorgrundkörpers oder Einzelzahngrundkörpers angepasst ist. Auf diese Weise ist außerdem bevorzugt vermieden, dass ein Werkzeug zum Herstellen des Isolationselementes aus dem Isolationsmaterial gewechselt werden muss. Vielmehr lassen sich allein mit der Laservorrichtung unterschiedliche Formen des Isolationselementes erreichen. Dazu ist die Messvorrichtung zum Senden der Messergebnisse des Vermessens an die Steuereinheit und/oder zum Senden von anhand des Vermessens generierten Bearbeitungsdaten an die Steuereinheit ausgebildet. Die Steuereinheit kann dann die Laservorrichtung entsprechend der Bearbeitungsdaten ansteuern, um das Isolationselement zu fertigen. Somit ist die Herstellungsvorrichtung flexibel einstellbar und erlaubt ein schnelles Fertigen von Isolationselementen, die an den zu isolierenden Statorgrundkörper oder Rotorgrundkörper oder Einzelzahngrundkörper angepasst sind.

### Kurze Beschreibung der Zeichnung(en)

Nachfolgend werden Ausführungsbeispiele der Erfindung unter Bezugnahme auf die begleitende Zeichnung im Detail beschrieben. In der Zeichnung ist:
- Figur 1: eine schematische Abbildung eines Ablaufes eines Verfahrens gemäß einem Ausführungsbeispiel der Erfindung
- Figur 2: eine schematische Darstellung eines Isolationselements, das mit dem Verfahren gemäß dem Ausführungsbeispiel der Erfindung aus einem Isolationsmaterial hergestellt wird,
- Figur 3: eine schematische Abbildung einer ersten Alternative einer Schwächungsstelle des Isolationselements, das mit dem Verfahren gemäß dem Ausführungsbeispiel der Erfindung hergestellt wurde,
- Figur 4: eine schematische Abbildung einer zweiten Alternative einer Schwächungsstelle des Isolationselements, das mit dem Verfahren gemäß dem Ausführungsbeispiel der Erfindung hergestellt wurde,
- Figur 5: eine schematische Abbildung eines Statorgrundkörpers mit einem eingelegten Isolationselement, das mit dem Verfahren gemäß dem Ausführungsbeispiel der Erfindung hergestellt wurde, und
- Figur 6: eine schematische Abbildung einer Herstellungsvorrichtung gemäß einem Ausführungsbeispiel der Erfindung.

### Ausführungsform(en) der Erfindung

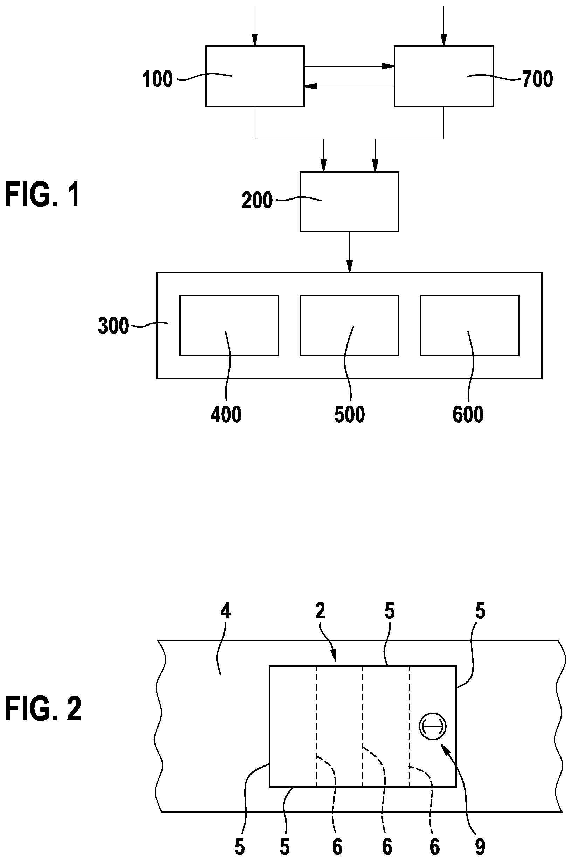

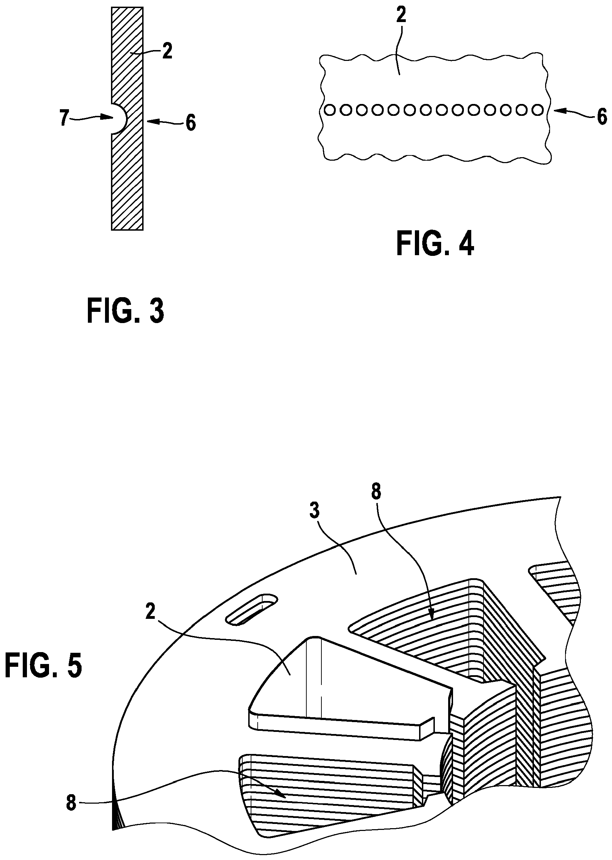

Figur 1 zeigt schematisch einen Ablauf eines Verfahrens gemäß einem Ausführungsbeispiel der Erfindung. Das Verfahren dient zum Herstellen eines Isolationselements 2, das insbesondere in Figur 5 gezeigt ist. Mit dem Isolationselement 2 ist ein Statorgrundkörper 3 (vgl. ebenfalls Figur 5) isolierbar. In dem gezeigten Ausführungsbeispiel dient das Isolationselement 2 zum isolieren einer Nut 8 des Statorgrundkörpers 3. Das Ausführungsbeispiel beschränkt sich auf einen Statorgrundkörper 3, wobei alternativ auch Rotorgrundkörper oder Einzahlzahnkörper, aus denen ein Statorgrundkörper oder ein Rotorgrundkörper zusammensetzbar ist, verwendet werden können.

Statorgrundkörper 3 umfassen zumeist eine Vielzahl von einzelnen Blechen, sodass der Statorgrundkörper 3 ein Blechpaket umfasst. Der Statorgrundkörper wird mit einer Wicklung versehen, indem um das Blechpaket zumindest ein elektrischer Leiter gewickelt wird, sodass ein Stromfluss durch den elektrischen Leiter zu einem elektrischen Feld führt, das einen relativ zu dem Statorgrundkörper 3 angeordneten Rotor verdrehen kann. Somit stellt der Statorgrundkörper 3 zusammen mit der Wicklung des elektrischen Leiters einen Stator eines Elektromotors dar.

Um zu verhindern, dass ein Kurzschluss zwischen Statorgrundkörper 3 und elektrischem Leiter entsteht, ist eine Isolierung einzubringen. Dazu ist mittels des Verfahrens gemäß dem Ausführungsbeispiel das Isolationselement 2 herstellbar, das in jeweils eine Nut 8 des Statorgrundkörpers 3 einlegbar ist und somit den elektrischen Leiter vor einem direkten Kontakt mit dem Statorgrundkörper 3 schützt. An Stirnflächen des Statorgrundkörpers 3 wird bevorzugt eine Isolationsmaske oder andersartige Isolation aufgebracht, sodass das Blechpaket des Statorgrundkörpers 3 vollständig von dem elektrischen Leiter isoliert ist.

Das Verfahren umfasst einen Schritt des Bereitstellens 100 eines Isolationsmaterials 4. Das Isolationsmaterial 4 ist das Grundmaterial, aus dem das Isolationselement 2 gefertigt werden soll. Insbesondere ist das Isolationsmaterial 4 eine strangförmiges oder bahnförmiges Grundmaterial, aus der das Isolationselement 2 ausschneidbar ist. Das Isolationsmaterial 4 kann ein beschichtetes oder unbeschichtetes Kunststoffmaterial sein.

Das Verfahren umfasst außerdem einen Schritt des Vermessens 700 des Statorgrundkörpers 3. Durch das Vermessen 700 sind Rahmenbedingungen für die Fertigung des Isolationselements 2 festlegbar. So muss jedes Isolationselement 2, das in eine Nut 8 des Statorgrundkörpers 3 eingelegt werden soll, die genauen Maße der Nut 8 aufweisen. Außerdem muss das Isolationselement 2 über die Enden des Statorgrundkörpers 3 hervorstehen, um eine sichere und zuverlässige Isolierung zu erreichen. Daher wird während des Vermessens 700 bevorzugt zumindest eine Dicke des Statorgrundkörpers 3 bestimmt. Vorteilhafterweise werden zusätzlich die Abmessungen der Nut 8 des Statorgrundkörpers 3 bestimmt. Anhand dieser Daten lassen sich Bearbeitungsdaten generieren. Die Bearbeitungsdaten umfassen Bearbeitungsschritte, wie das Isolationsmaterial 4 zu bearbeiten ist, um daraus das Isolationselement 2 zu fertigen.

Die Bearbeitungsdaten umfassen bevorzugt die Vorgänge Schneiden 400 und Schwächen 500. Dazu sind Schneidestellen 5 sowie Schwächungsstellen 6 definiert, an denen die Vorgänge Schneiden 400 und Schwächen 500 durchgeführt werden sollen.

Anschließend erfolgt ein Empfangen 200 von den Bearbeitungsdaten. Insbesondere empfängt eine Bearbeitungseinheit die Bearbeitungsdaten von einer Messeinheit. Dies ermöglicht ein Fertigen des Isolationselements 2 aus dem bereitgestellten Isolationsmaterial 4.

Der Schritt des Vermessens 700 wird vorteilhafterweise optional durchgeführt. Das Verfahren kann ausgehend von dem Schritt des Bereitstellens 100 direkt zu dem Empfangen des 200 verlaufen. Alternativ kann der das Vermessen 700 nach, vor, oder während des Bereitstellens 100 erfolgen. Sollte das Vermessen 700 nicht durchgeführt werden, so werden während des Empfanges 700 dieselben Bearbeitungsdaten empfangen, die bei einem früher durchgeführten Vermessen 700 generiert wurden. Alternativ werden vordefinierte Standard-Bearbeitungsdaten empfangen.

Ein nachfolgender Schritt des Bearbeitens 300 des Isolationsmaterials 4 dient zum Herstellen dies Isolationselements 2. Dazu wird das Isolationsmaterial 4 gemäß den Bearbeitungsdaten mittels einer Laservorrichtung bearbeitet. Das Bearbeiten 300 umfasst bevorzugt das Schneiden 400 entlang der Schnittstelle 5 und das Schwächen 500 entlang der Schwächungsstelle 6.

Das Bearbeiten 300 ist in Figur 2 illustriert. Hier ist dargestellt, wie durch das Bearbeiten des Isolationsmaterials 4 anhand der Bearbeitungsdaten ein Isolationselement 2 hergestellt werden kann. Dazu wird das Isolationsmaterial 4 durch die Laservorrichtung an den Schnittstellen 5 vollständig geschnitten. Vorteilhafterweise wird zuvor an jeder Schwächungsstelle 5 ein Schwächen 500 des Isolationsmaterials 4 durchgeführt. An den Schwächungsstellen 5 ist das Isolationsmaterial 4 daher leicht faltbar. Somit lässt sich das Isolationselement 2 einfach und kostengünstig sowie rasch herstellen. Durch die Verwendung der Laservorrichtung für das Bearbeiten 300 sind verschiedene Formen des Isolationselements 2 einfach zu fertigen, wobei kein Werkzeugtausch notwendig ist.

Verschiedene Möglichkeiten des Schwächens 500 sind in Figur 3 und Figur 4 gezeigt. Figur 3 zeigt eine erste Alternative, bei der an der Schwächungsstelle 6 das Isolationsmaterial 4 teilweise entfernt wird. Insbesondere wird drei Viertel, bevorzugt die Hälfte, besonders bevorzugt ein Viertel, der Dicke des Isolationsmaterials 4 entfernt. Dies ist vorteilhafterweise dadurch zu erreichen, dass eine Ausgangsleistung der Laservorrichtung gegenüber dem Schritt des Schneidens 400 reduziert wird, sodass die verbleibende Ausgangsleistung nicht mehr zum vollständigen durchschneiden des Isolationsmaterials 4 ausreicht.

Figur 4 zeigt eine zweite Alternative, bei der eine Perforation entlang der Schwächungsstelle 6 durchgeführt wird. Die Schwächungsstelle 6 ist durch wiederholtes abschnittsweises Durchschneiden des Isolationsmaterials 4 gebildet. Die zweite Alternative hat den Vorteil, dass die Ausgangsleistung der Laservorrichtung konstant bleiben kann und für das Ausbilden der Schwächungsstellen 6 nicht reduziert werden muss. Somit ist eine Ansteuerung der Laservorrichtung vereinfacht.

Sowohl die erste Alternative als auch die zweite Alternative erlauben ein bogenförmiges ausgestalten der Schwächungsstelle. Insbesondere kann eine S-förmige Schwächungsstelle 6 gefertigt werden. Dies ermöglicht ein einfaches Falten des Isolationsmaterials.

Der Schritt des Bearbeitens 300 kann bevorzugt zusätzlich ein Aufbringen 600 eines Musters 9 und/oder eines Schriftzugs umfassen. Durch die Laservorrichtung lässt sich das Muster 9 und/oder der Schriftzug einfach und präzise auf das Isolationsmaterial 4 aufbringe. Somit lassen sich bevorzugt Hinweise anbringen, an welche Position und/oder an welchen Statorgrundkörper 3 das hergestellte Isolationselement 2 anzulegen ist.

Figur 5 zeigt schematisch einen Statorgrundkörper 3, wobei in eine der Nuten 8 des Statorgrundkörpers 3 ein Isolationselement 2 eingelegt ist. Außerdem ist ersichtlich, dass das Isolationselement 2 über die Kanten des Statorgrundkörpers 3 hervorsteht, da eine Länge des Isolationselementes 2 größer als eine Dicke des Statorgrundkörpers 3 ist. Dies wird bevorzugt dadurch erreicht, dass zu der Dicke des Statorgrundkörpers 3, die während des Schritts des Vermessens 700 bestimmt wurde, ein Offset addiert wird. Das Ergebnis wird als die zu fertigende Länge des Isolationselements 2 angesehen, was insbesondere durch einen Abstand zweier gegenüberliegender Schnittstellen 5 (vgl. Figur 2) repräsentiert wird. Durch das Überstehen des Isolationselements 2 über den Statorgrundkörper 3 ist eine Isolationswirkung sichergestellt. Die Stirnflächen des Statorgrundkörpers 3 werden vorteilhafterweise mit einer Isolationsmaske versehen, sodass auch an diesen Stellen keinerlei Kontakt zwischen einer Wicklung und dem Statorgrundkörper 3 entstehen kann und bevorzugt auch vorgesehene Luft- und Kriechstrecken, insbesondere nach EN 60664-1, eingehalten sind.

Wie aus Figur 5 ersichtlich ist umfasst ein Statorgrundkörper 3 eine Vielzahl von Nuten 8. Für jede dieser Nut 8 ist gemäß dem Verfahren nach dem bevorzugten Ausführungsbeispiel der Erfindung ein Isolationselement 2 herstellbar. Dabei ist der Schritt des Vermessens 700 bevorzugt nur einmal durchzuführen, um eine Dicke des Statorgrundkörpers 3 zu ermitteln. Anschließend wird das Verfahren wiederholt so lange durchgeführt, bis alle Isolationselemente 2 für den Statorgrundkörper 3 gefertigt sind, wobei auf den Schritt des Vermessens 700 verzichtet wird. Erst wenn Isolationselemente 2 für einen neuen Statorgrundkörper 3 hergestellt werden sollen, wird der Schritt des Vermessens 700 erneut einmalig durchgeführt, um eine Dicke des neuen Statorgrundkörpers 3 zu ermitteln. Alternativ erfolgt ein Vermessen 700 jeder einzelnen Nut 8 des Statorgrundkörpers 3, sodass jedes gefertigte Isolationselement 2 exakt an eine Nut 8 eines Statorgrundkörpers 3 angepasst ist.

Das Fertigen des Isolationselements 2 aus dem Isolationsmaterial 4 benötigt einen Zeitraum von maximal einer Sekunde, bevorzugt von maximal einer halben Sekunde. Dies ist insbesondere durch die Schnelligkeit der Laservorrichtung erreichbar. Dabei weist das Verfahren gemäß dem Ausführungsbeispiel neben seiner Schnelligkeit auch eine große Flexibilität auf, da unterschiedliche Formen des Isolationselements 2 einfach zu fertigen sind.

Der für das Fertigen des Isolationselements 2 notwendige Schritt des Faltens entspricht dem Stand der Technik und ist daher nicht detailliert beschrieben. Gleiches gilt für das Einsetzten des Isolationselements 2 in eine Nut 8 des Statorgrundkörpers 3.

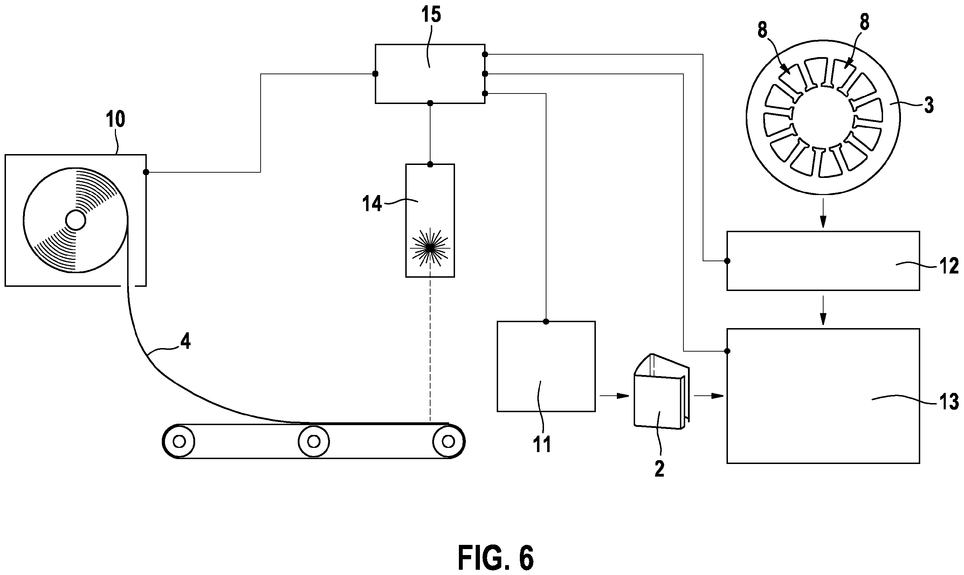

Figur 6 zeigt eine Herstellungsvorrichtung 1 gemäß einem Ausführungsbeispiel der Erfindung. Mit der Herstellungsvorrichtung 1 sind Isolationselemente 2 aus einem Isolationsmaterial 4 herstellbar. Das Herstellen des Isolationselements 2 erfolgt insbesondere gemäß dem zuvor beschriebenen Verfahren.

Die Herstellungsvorrichtung 1 umfasst eine Materialzufuhr 10, eine Laservorrichtung 14, eine Messvorrichtung 12, eine Faltvorrichtung 11, eine Einsatzvorrichtung 13 und eine Steuervorrichtung 15. Dabei dient die Materialzufuhr 10 insbesondere zum Durchführen des Schritts des Bereitstellens 100 des Isolationsmaterials 4. Die Messvorrichtung 12 dient insbesondere zum Durchführen des Schritts des Vermessens 700. Die Laservorrichtung 14 und insbesondere auch die Faltvorrichtung 11 dienen bevorzugt zum Durchführen des Schritts des Bearbeitens 300. Mittels der Einsatzvorrichtung 13 ist das gefertigte Isolationselement 2 in den Statorgrundkörper 3 einsetzbar.

Die Steuervorrichtung 15 ist zur Signalübertragung mit der Materialzufuhr 10, der Laservorrichtung 14, der Messvorrichtung 12, der Faltvorrichtung 11 und der Einsatzvorrichtung 13 verbunden. Insbesondere dient die Steuervorrichtung 15 zum Empfangen von Bearbeitungsdaten, die von der Messvorrichtung 12 aufgrund des Vermessens 700 des Statorgrundkörpers 3 generiert wurden. Alternativ oder zusätzlich ist die Steuervorrichtung 15 eingerichtet, Bearbeitungsdaten zu generieren, insbesondere dann, wenn kein Vermessen 700 durch die Messvorrichtung 12 durchgeführt wurde.

Die Laservorrichtung 14 umfasst bevorzugt einen CO2-Laser. Der CO2-Laser ist einfach und kostengünstig herstellbar und erlaubt ein sicheres und zuverlässiges Bearbeiten 300, insbesondere Schneiden 400 und Schwächen 500, des Isolationsmaterials 4.

Nachdem das Isolationsmaterial 4 von der Laservorrichtung 14 bearbeitet wurde, wobei die Laservorrichtung 14 zum Bearbeiten 300 von dem Steuergerät 15 entsprechend der Bearbeitungsdaten angesteuert wird, wird das Isolationsmaterial 4 von der Faltvorrichtung 11 gefaltet. Anschließend wird das fertige Isolationselement 2 an die Einsatzvorrichtung 13 übergeben, in der das Isolationselement 2 in eine Nut 8 des Statorgrundkörpers 3 eingesetzt wird.

Die Herstellungsvorrichtung 1 erlaubt ein schnelles und exaktes Fertigen von Isolationselementen 2, wobei unterschiedliche Formen der Isolationselemente 2 einfach und aufwandsarm realisiert werden können. So lassen sich unterschiedliche Formen einfach durch entsprechende Ansteuerung der Laservorrichtung 14 umsetzen. Auf diese Weise ist insbesondere ein Werkzeugtausch vermieden.

## Patentansprüche

1. Verfahren zum Herstellen eines Isolationselements (2) für einen Statorgrundkörper (3) oder Rotorgrundkörper oder Einzelzahngrundkörper, umfassend die Schritte:
• Bereitstellen (100) eines Isolationsmaterials (4), und
• Bearbeiten (300) des Isolationsmaterials (4) zum Herstellen des Isolationselements (2) aus dem Isolationsmaterial (4), und
• Empfangen (200) oder Generieren oder Abrufen von Bearbeitungsdaten mittels einer Steuereinheit (15), anhand derer das Isolationsmaterial (4) bearbeitet werden muss, um das Isolationselement (2) herzustellen, bevor das Isolationselement (2) in eine Nut (8) des Statorgrundkörpers (3) oder Rotorgrundkörpers oder Einzelzahngrundkörpers eingelegt werden kann,
wobei
• der Schritt des Bearbeitens (300) des Isolationsmaterials (4) mittels einer Laservorrichtung (14) und gemäß den Bearbeitungsdaten erfolgt,
• die Bearbeitungsdaten zumindest eine Schwächungsstelle (6) des Isolationsmaterials (4) zum Schwächen des Isolationsmaterials (4) oder zumindest eine Schnittstelle (5) des Isolationsmaterials (4) zum Schneiden des Isolationsmaterials (4) und zumindest eine Schwächungsstelle (6) des Isolationsmaterials (4) zum Schwächen des Isolationsmaterials (4) definieren, und
• das Bearbeiten (300) ein Schwächen (500) des Isolationsmaterials (4) entlang der Schwächungsstelle (6) oder ein Schneiden (400) des Isolationsmaterials entlang der Schnittstelle (5) und ein Schwächen (500) des Isolationsmaterials (4) entlang der Schwächungsstelle (6) umfasst.

2. Verfahren nach Anspruch 1, **dadurch gekennzeichnet, dass** das Schwächen (500) des Isolationsmaterials (4) ein Einbringen einer Vertiefung (7) in das Isolationsmaterial (4) und/oder ein Perforieren des Isolationsmaterials (4) umfasst.

3. Verfahren nach Anspruch 2, **dadurch gekennzeichnet, dass** das Einbringen der Vertiefung (7) und/oder das Perforieren entlang einer bogenförmigen, insbesondere einer S-förmigen, Schwächungsstelle (6) erfolgt.

4. Verfahren nach einem der vorhergehenden Ansprüche, **dadurch gekennzeichnet, dass** das vor dem Empfangen (200) der Bearbeitungsdaten ein Vermessen (700) des Statorgrundkörpers (3) oder Rotorgrundkörpers oder Einzelzahngrundkörpers durchgeführt wird, wobei die Bearbeitungsdaten aus einer Vermessung des Statorgrundkörpers (3) oder Rotorgrundkörpers oder Einzelzahngrundkörpers generiert werden.

5. Verfahren nach einem der vorhergehenden Ansprüche, **dadurch gekennzeichnet, dass** eine Länge des Isolationselements (2), die durch einen Abstand zwischen zwei gegenüberliegenden Schnittstellen (5) definiert wird, aus einer gemessen Dicke des Statorgrundkörpers (3) oder Rotorgrundkörpers oder Einzelzahngrundkörpers bestimmt wird, wobei zu der gemessenen Dicke ein Offset addiert wird.

6. Verfahren nach Anspruch 4 oder 5, **dadurch gekennzeichnet, dass** für den Statorgrundkörper (3) oder Rotorgrundkörper oder Einzelzahngrundkörper eine Vielzahl von Isolationselementen (2) hergestellt wird, die in jeweils eine Nut (8) des Statorgrundkörpers (3) oder Rotorgrundkörpers oder Einzelzahngrundkörpers einlegbar sind, wobei die Bearbeitungsdaten für alle Isolationselemente (2) identisch sind.

7. Verfahren nach Anspruch 4 oder 5, **dadurch gekennzeichnet, dass** für den Statorgrundkörper (3) oder Rotorgrundkörper oder Einzelzahngrundkörper eine Vielzahl von Isolationselementen (2) hergestellt wird, die in jeweils eine Nut (8) des Statorgrundkörpers (3) oder Rotorgrundkörpers oder Einzelzahngrundkörpers einlegbar sind, wobei die Bearbeitungsdaten für jedes einzelne Isolationselement (2) individuell angepasst sind.

8. Verfahren nach einem der vorhergehenden Ansprüche, **dadurch gekennzeichnet, dass** die Bearbeitungsdaten ein auf das Isolationsmaterial (4) aufzubringendes Muster (9) und/oder einen auf das Isolationsmaterial (4) aufzubringenden Schriftzug umfasst, wobei das Bearbeiten ein Aufbringen (600) des Musters (9) und/oder des Schriftzuges auf das Isolationsmaterial (4) umfasst.

9. Verfahren nach einem der vorhergehenden Ansprüche, **dadurch gekennzeichnet, dass** ein Zeitraum für das Bearbeiten (300) des Isolationsmaterials (4) anhand der Bearbeitungsdaten maximal eine Sekunde, insbesondere maximal eine halbe Sekunde, beträgt.

10. Herstellungsvorrichtung (1) zum Herstellen eines Isolationselements (2) für einen Statorgrundkörper (3) oder Rotorgrundkörper oder Einzelzahngrundkörper, umfassend:
• eine Materialzufuhr (10) zum Zuführen eines Isolationsmaterials (4),
• eine Laservorrichtung (14) zum Bearbeiten des Isolationsmaterials (4), und
• eine Steuereinheit (15) zum Empfangen und/oder Generieren und/oder Abrufen von Bearbeitungsdaten und zum Ansteuern der Laservorrichtung (14) anhand der Bearbeitungsdaten,
• wobei mittels des Bearbeitens des Isolationsmaterials (4) das Isolationselement (2) aus dem Isolationsmaterial (4) gemäß den Bearbeitungsdaten herstellbar ist, bevor das Isolationselement in eine Nut (8) des Statorgrundkörpers (3) oder Rotorgrundkörpers oder Einzelzahngrundkörpers einlegbar ist, wobei die Bearbeitungsdaten zumindest eine Schwächungsstelle (6) des Isolationsmaterials (4) zum Schwächen des Isolationsmaterials (4) oder zumindest eine Schnittstelle (5) des Isolationsmaterials (4) zum Schneiden des Isolationsmaterials (4) und zumindest eine Schwächungsstelle (6) des Isolationsmaterials (4) zum Schwächen des Isolationsmaterials (4) definieren, und
• wobei das Bearbeiten des Isolationsmaterials (4) die Vorgänge Schwächen des Isolationsmaterials (4) entlang der Schwächungsstelle (6) oder Schneiden des Isolationsmaterials entlang der Schnittstelle (5) und Schwächen des Isolationsmaterials (4) entlang der Schwächungsstelle (6) umfasst.

11. Herstellungsvorrichtung nach Anspruch 9, **gekennzeichnet durch** eine Messvorrichtung (12) zum Vermessen des Statorgrundkörpers (3) oder Rotorgrundkörpers oder Einzelzahngrundkörpers, insbesondere zum Vermessen einer Dicke des Statorgrundkörpers (3) oder Rotorgrundkörpers oder Einzelzahngrundkörpers und/oder einer Abmessung zumindest einer Nut (8) des Statorgrundkörpers (3) oder Rotorgrundkörpers oder Einzelzahngrundkörpers, wobei die Messvorrichtung (12) zum Senden der Messergebnisse und/oder von anhand des Vermessens generierten Bearbeitungsdaten an die Steuereinheit (15) ausgebildet ist.

## Claims

1. A method for producing an insulation element (2) for a stator base body (3) or rotor base body or single tooth base body, including the steps:
• providing (100) an insulation material (4), and
• processing (300) the insulation material (4) to produce the insulation element (2) from the insulation material (4), and
• receiving (200) or generating or retrieving of processing data using a control unit (15), by which the insulation material (4) has to be processed in order to produce the insulation element (2) before the insulation element (2) can be inserted into a groove (8) in the stator base body (3) or rotor base body or single tooth base body,
wherein
• the step of processing (300) the insulation material (4) is performed using a laser device (14) and in accordance with the processing data,
• the processing data define at least one weakening area (6) of the insulation material (4) for weakening the insulation material (4) or at least one cutting area (5) of the insulation material (4) for cutting the insulation material (4) and at least one weakening area (6) of the insulation material (4) for weakening the insulation material (4), and
• processing (300) includes weakening (500) the insulation material (4) along the weakening point (6), or cutting (400) the insulation material along the interface (5) and weakening (500) the insulation material (4) along the weakening point (6).

2. The method according to claim 1, **characterized in that** the weakening (500) of the insulation material (4) includes introducing a recess (7) into the insulation material (4) and/or perforating the insulation material (4).

3. The method according to claim 2, **characterized in that** the introducing of the recess (7) and/or the perforating is performed along an arcuate, in particular an S-shaped, weakening area (6).

4. The method according to any one of the preceding claims, **characterized in that** prior to receiving (200) the processing data, a measuring (700) of the stator base body (3) or rotor base body or single tooth base body is performed, the processing data being generated from a measurement of the stator base body (3) or rotor base body or single tooth base body.

5. The method according to any one of the preceding claims, **characterized in that** a length of the insulation element (2), which is defined by a distance between two opposing cutting areas (5), is determined from a measured thickness of the stator base body (3) or rotor base body or single tooth base body, an offset being added to the measured thickness.

6. The method according to claim 4 or 5, **characterized in that** a plurality of insulation elements (2) is produced for the stator base body (3) or rotor base body or single tooth base body, each of which can be inserted into a groove (8) of the stator base body (3) or rotor base body or single tooth base body, the processing data for all insulation elements (2) being identical.

7. The method according to claim 4 or 5, **characterized in that** a plurality of insulation elements (2) are produced for the stator base body (3) or rotor base body or single tooth base body, each of which can be inserted into a groove (8) of the stator base body (3) or rotor base body or single tooth base body, the processing data for each individual insulation element (2) being individually adapted.

8. The method according to any one of the preceding claims, **characterized in that** the processing data comprises a pattern (9) to be applied to the insulation material (4), and/or a lettering to be applied to the insulation material (4), wherein the processing comprises applying (600) the pattern (9) and/or the lettering to the insulation material (4).

9. The method according to any one of the preceding claims, **characterized in that** a time period for processing (300) the insulation material (4) using the processing data is a maximum of one second, in particular a maximum of half a second.

10. A manufacturing device (1) for manufacturing an insulation element (2) for a stator base body (3) or rotor base body or single tooth base body, including:
• a material feed (10) for feeding an insulation material (4),
• a laser device (14) for processing the insulation material (4), and
• a control unit (15) for receiving and/or generating and/or retrieving processing data and for controlling the laser device (14) using the processing data,
• wherein the insulation element (2) can be produced from the insulation material (4) in accordance with the processing data by processing the insulation material (4) before the insulation element can be inserted into a groove (8) of the stator base body (3) or rotor base body or single tooth base body, wherein the processing data defines at least one weakening area (6) of the insulation material (4) for weakening the insulation material (4), or at least one cutting area (5) of the insulation material (4) for cutting the insulation material (4) and at least one weakening area (6) of the insulation material (4) to weaken the insulation material (4), and
• wherein the processing of the insulating material (4) includes the operations of weakening the insulating material (4) along the weakening area (6), or cutting the insulating material along the cutting area (5), and weakening the insulating material (4) along the weakening area (6).

11. The manufacturing device according to claim 9, **characterized by** a measuring device (12) for measuring the stator base body (3) or rotor base body or single tooth base body, in particular for measuring a thickness of the stator base body (3) or rotor base body or single tooth base body, and/or a dimension of at least one groove (8) of the stator base body (3) or rotor base body or single tooth base body, the measuring device (12) being adapted to send the measurement results and/or processing data generated based on the measurement to the control unit (15).

## Revendications

1. Procédé de fabrication d'un élément d'isolation (2) pour un corps de base de stator (3) ou un corps de base de rotor ou un corps de base de dent individuelle, comprenant les étapes :
- de fourniture (100) d'un matériau d'isolation (4), et
- d'usinage (300) du matériau d'isolation (4) pour fabriquer l'élément d'isolation (2) à partir du matériau d'isolation (4), et
- de réception (200) ou de génération ou d'appel de données d'usinage au moyen d'une unité de commande (15), à l'aide desquelles le matériau d'isolation (4) doit être usiné, pour fabriquer l'élément d'isolation (2) avant que l'élément d'isolation (2) ne puisse être placé dans une rainure (8) du corps de base de stator (3) ou du corps de base de rotor ou du corps de base de dent individuelle,
dans lequel
- l'étape de l'usinage (300) du matériau d'isolation (4) est effectuée au moyen d'un dispositif laser (14) et selon les données d'usinage,
- les données d'usinage définissent au moins un emplacement d'affaiblissement (6) du matériau d'isolation (4) pour affaiblir le matériau d'isolation (4) ou au moins un emplacement de coupe (5) du matériau d'isolation (4) pour découper le matériau d'isolation (4) et au moins un emplacement d'affaiblissement (6) du matériau d'isolation (4) pour affaiblir le matériau d'isolation (4), et
- l'usinage (300) comprend un affaiblissement (500) du matériau d'isolation (4) le long de l'emplacement d'affaiblissement (6) ou un découpage (400) du matériau d'isolation le long de l'emplacement de coupe (5) et un affaiblissement (500) du matériau d'isolation (4) le long de l'emplacement d'affaiblissement (6).

2. Procédé selon la revendication 1, **caractérisé en ce que** l'affaiblissement (500) du matériau d'isolation (4) comprend une pratique d'un renfoncement (7) dans le matériau d'isolation (4) et/ou une perforation du matériau d'isolation (4).

3. Procédé selon la revendication 2, **caractérisé en ce que** la pratique du renfoncement (7) et/ou la perforation sont effectuées le long d'un emplacement d'affaiblissement (6) en forme d'arc, en particulier en forme de S.

4. Procédé selon l'une quelconque des revendications précédentes, **caractérisé en ce qu'**avant la réception (200) des données d'usinage, une mesure (700) du corps de base de stator (3) ou du corps de base de rotor ou du corps de base de dent individuelle est mise en œuvre, dans lequel les données d'usinage sont générées à partir d'une mesure du corps de base de stator (3) ou du corps de base de rotor ou du corps de base de dent individuelle.

5. Procédé selon l'une quelconque des revendications précédentes, **caractérisé en ce qu'**une longueur de l'élément d'isolation (2), qui est définie par une distance entre deux emplacements de coupe (5) se faisant face, est déterminée à partir d'une épaisseur mesurée du corps de base de stator (3) ou du corps de base de rotor ou du corps de base de dent individuelle, dans lequel un décalage est ajouté à l'épaisseur mesurée.

6. Procédé selon la revendication 4 ou 5, **caractérisé en ce qu'**est fabriquée pour le corps de base de stator (3) ou le corps de base de rotor ou le corps de base de dent individuelle une pluralité d'éléments d'isolation (2), qui peuvent être placés dans respectivement une rainure (8) du corps de base de stator (3) ou du corps de base de rotor ou du corps de base de dent individuelle, dans lequel les données d'usinage sont identiques pour tous les éléments d'isolation (2).

7. Procédé selon la revendication 4 ou 5, **caractérisé en ce qu'**est fabriquée pour le corps de base de stator (3) ou le corps de base de rotor ou le corps de base de dent individuelle une pluralité d'éléments d'isolation (2), qui peuvent être placés dans respectivement une rainure (8) du corps de base de stator (3) ou du corps de base de rotor ou du corps de base de dent individuelle, dans lequel les données d'usinage sont adaptées individuellement pour chaque élément d'isolation (2) individuel.

8. Procédé selon l'une quelconque des revendications précédentes, **caractérisé en ce que** les données d'usinage comprennent un motif (9) à appliquer sur le matériau d'isolation (4) et/ou une inscription à appliquer sur le matériau d'isolation (4), dans lequel l'usinage comprend une application (600) du motif (9) et/ou de l'inscription sur le matériau d'isolation (4).

9. Procédé selon l'une quelconque des revendications précédentes, **caractérisé en ce qu'**un laps de temps pour l'usinage (300) du matériau d'isolation (4) à l'aide des données d'usinage est égal au maximum à une seconde, en particulier au maximum à une demi-seconde.

10. Dispositif de fabrication (1) pour fabriquer un élément d'isolation (2) pour un corps de base de stator (3) ou un corps de base de rotor ou un corps de base de dent individuelle, comprenant :
- une arrivée de matériau (10) pour amener un matériau d'isolation (4),
- un dispositif laser (14) pour usiner le matériau d'isolation (4), et
- une unité de commande (15) pour recevoir et/ou générer et/ou appeler des données d'usinage et pour piloter le dispositif laser (14) à l'aide des données d'usinage,
- dans lequel l'élément d'isolation (2) peut être fabriqué au moyen de l'usinage du matériau d'isolation (4) à partir du matériau d'isolation (4) selon les données d'usinage, avant que l'élément d'isolation ne puisse être placé dans une rainure (8) du corps de base de stator (3) ou du corps de base de rotor ou d'un corps de base de dent individuelle, dans lequel les données d'usinage définissent au moins un emplacement d'affaiblissement (6) du matériau d'isolation (4) pour affaiblir le matériau d'isolation (4) ou au moins un emplacement de coupe (5) du matériau d'isolation (4) pour découper le matériau d'isolation (4) et au moins un emplacement d'affaiblissement (6) du matériau d'isolation (4) pour affaiblir le matériau d'isolation (4), et
- dans lequel l'usinage du matériau d'isolation (4) comprend les opérations d'affaiblissement du matériau d'isolation (4) le long de l'emplacement d'affaiblissement (6) ou de découpe du matériau d'isolation le long de l'emplacement de coupe (5) et d'affaiblissement du matériau d'isolation (4) le long de l'emplacement d'affaiblissement (6).

11. Dispositif de fabrication selon la revendication 9, **caractérisé par** un dispositif de mesure (12) pour mesurer le corps de base de stator (3) ou le corps de base de rotor ou le corps de base de dent individuelle, en particulier pour mesurer une épaisseur du corps de base de stator (3) ou du corps de base de rotor ou du corps de base de dent individuelle et/ou une dimension d'au moins une rainure (8) du corps de base de stator (3) ou du corps de base de rotor ou du corps de base de dent individuelle, dans lequel le dispositif de mesure (12) est réalisé pour envoyer les résultats de mesure et/ou les données d'usinage générées à l'aide de la mesure à l'unité de commande (15).
